# EUROPÄISCHE PATENTSCHRIFT

(11) **EP 2 128 965 B1**
(45) Veröffentlichungstag und Bekanntmachung des Hinweises auf die Patenterteilung: **17.07.2013**
(21) Anmeldenummer: 08009676.1
(22) Anmeldetag: 28.05.2008
(51) Int. Cl.: H02K 11/00

(54) **Drehrichtungsanzeiger**
Rotation direction indicator
Dispositif d'affichage du sens de rotation

(43) Veröffentlichungstag der Anmeldung: 02.12.2009
(73) Patentinhaber: Grundfos Management A/S, 8850 Bjerringbro (DK)
(72) Erfinder: Østergaard, Lars, 8900 Randers (DK); Nøgard, Carsten, 8900 Randers (DK)
(74) Vertreter: Hemmer, Arnd

(56) Entgegenhaltungen:
- DE-A1- 2 532 436
- FR-A- 2 512 853

## Beschreibung

Die Erfindung betrifft einen Elektromotor mit einem Drehrichtungsanzeiger und ein Pumpenaggregat.

Elektromotoren sind regelmäßig in einer bevorzugten Drehrichtung zu betreiben, wobei sich die Drehrichtung nach dem Einsatzzweck der vom Elektromotor angetriebenen Gerätschaften richtet. Dies ist insbesondere bei Kreiselpumpen relevant, welche von einem Drehstrommotor angetrieben werden. Wird die Pumpe in einem falschen Drehsinn betrieben, resultiert dies in einer deutlich herabgesetzten Pumpeffizienz. Ein Betrieb des Elektromotors im falschen Drehsinn kann beispielsweise bei einem Drehstrommotor von einem versehentlichen Vertauschen zweier Phasen beim Anschluss an eine Spannungsversorgung herrühren.

Es ist daher erforderlich, beim Anschluss eines Elektromotors zu kontrollieren, ob die Drehrichtung des Elektromotors der vorgesehenen Drehrichtung entspricht. Eine Signaleinrichtung zur Signalisierung einer falschen Drehrichtung eines Elektromotors ist beispielsweise aus der Druckschrift DE 25 32 436 A1 bekannt. Darin wird eine Signaleinrichtung offenbart, welche innerhalb eines Lüftergehäuses an einem Kühllüfter angeordnet ist. Bei der Signaleinrichtung wird eine bewegliche Zunge bei falscher Drehrichtung des Elektromotors durch den Luftstrom des Kühllüfters in das Lüfterrad bewegt. Dort wird die Zunge von den Schaufeln des Lüfterrades erfasst und verursacht ein knatterndes Geräusch, welches eine falsche Drehrichtung signalisiert.

Nachteilig unterliegt die Zunge einer solchen Signaleinrichtung einem starken Verschleiß, wenn diese vom Lüfterrad erfasst wird. Ferner liefert eine solche Signaleinrichtung lediglich ein akustisches Signal. Beispielsweise in geräuschvoller Umgebung ist damit eine Drehrichtungskontrolle schwierig. Weiterhin nachteilig ist, dass bei der Signaleinrichtung die richtige Drehrichtung fest vorgegeben ist. Es ist nicht möglich, im Einzelfall die gewünschte Drehrichtung zu wählen.

Es ist daher Aufgabe der Erfindung, einen Elektromotor zu schaffen, bei dem die Drehrichtung von außen erkannt werden kann. Ferner ist es Aufgabe der Erfindung ein Pumpenaggregat mit einem solchen Elektromotor zu schaffen.

Diese Aufgabe wird durch einen Elektromotor mit den in Anspruch 1 angegebenen Merkmalen sowie durch ein Pumpenaggregat mit den in Anspruch 9 angegebenen Merkmalen gelöst. Vorteilhafte Ausgestaltungen der Erfindung sind in den entsprechenden Unteransprüchen, der nachfolgenden Beschreibung und der Zeichnung angegeben.

Der erfindungsgemäße Elektromotor weist einen Kühllüfter und einen Drehrichtungsanzeiger auf mit einem zwischen zwei Positionen beweglichen Anströmungselement. Dieses ist derart an einem Elektromotor mit einem Kühllüfter anordbar, dass das Anströmungselement in einem Luftstrom des Kühllüfters gelegen ist, dessen Strömungsrichtung von der Drehrichtung des Elektromotors abhängt. In dieser Anordnung wird abhängig von der Richtung dieses Luftstroms das Anströmungselement in jeweils eine seiner beiden Positionen bewegt. Ferner weist der Drehrichtungsanzeiger eine Anzeigeeinheit auf, die zu einer visuellen Anzeige der Position des Anströmungselements ausgebildet ist. Dabei ist die Anzeige sichtbar an einer Außenseite des Elektromotors angeordnet. Der Drehrichtungsanzeiger weist zudem eine Anzeigestelleinheit auf. Diese Anzeigestelleinheit verbindet Anzeigeeinheit und Anströmungselement miteinander und überträgt die Position des Anströmungselements zu der Anzeigeeinheit. Dabei ist über die Anzeigestelleinheit die Anzeigeeinheit in Abhängigkeit von der Position des Anströmungselementes stellbar. Da die Position des Anströmungselementes von der Richtung des Luftstroms im Kühllüfter und damit von der Drehrichtung des Elektromotors abhängt, kann somit die Drehrichtung des Elektromotors von der Anzeigeeinheit angezeigt werden. Vorteilhaft können auf diese Weise beide Drehrichtungen des Elektromotors angezeigt werden. Damit erlaubt der Drehrichtungsanzeiger vorteilhaft eine Kontrolle der Drehrichtung auch dann, wenn die richtige Drehrichtung nicht fest vorgegeben ist. Es ist also möglich, die richtige Drehrichtung im Einzelfall frei zu wählen, ohne dass Modifikationen des Drehrichtungsanzeigers erforderlich sind.

Bevorzugt weist die Anzeigestelleinheit des Drehrichtungsanzeigers eine Welle auf, die das Anströmungselement und das Anzeigeelement verbindet. Insbesondere sind Anströmungselement und Anzeigeelement jeweils drehfest mit der Welle verbunden. Dabei ist die aus Anströmungselement, Welle und Anzeigeelement gebildete Baugruppe vorzugsweise an der Welle drehbar gelagert, d.h. die Welle ist drehbar in Halte- oder Lagerelementen aufgenommen. Die Welle bildet somit die Schwenkachse für das Anströmungs- wie auch das Anzeigeelement. Entsprechend resultiert eine Auslenkung des Anströmungselements direkt in einer Schwenkbewegung des Anzeigeelementes, da Anzeigeelement und Anströmungselement drehfest miteinander gekoppelt sind.

Das Anströmungselement ist vorzugsweise flächig ausgebildet, sodass die Anströmung durch den Luftstrom effizient in eine Bewegung des Anströmungselements umsetzbar ist. Dabei ist das Anströmungselement vorzugsweise quer, insbesondere senkrecht zum Luftstrom angeordnet. Auf diese Weise kann der Luftstrom das Anströmungselement leicht bewegen, beispielsweise schwenken, verschieben oder elastisch verformen, was hier vom Begriff der Bewegung mit umfasst sein soll. Die Anzeigestelleinheit verbindet Anströmungselement und Anzeigeeinheit vorzugsweise mechanisch miteinander und überträgt mechanisch die Position bzw. Auslenkung oder Verformung des Anströmungselements zur Anzeigeeinheit. Alternativ kann die Verbindung bzw. Übertragung auch elektrisch, pneumatisch oder hydraulisch erfolgen.

Bevorzugt ist bei dem Drehrichtungsanzeiger das Anströmungselement schwenkbar angeordnet. Ferner bevorzugt besitzt das Anströmungselement eine gegenüber der Luftanströmung hinreichend hohe Steifigkeit. Auf diese Weise führt die Luftanströmung an das Anströmungselement effizient zu einer Schwenkbewegung des Anströmungselementes und nicht lediglich zu einer Verformung. Damit sind die beiden Positionen, in welche das Anströmungselement bewegt werden kann, durch die beiden Schwenkrichtungen charakterisiert, in welche das Anströmungselement vom Luftstrom ausgelenkt werden kann. Weiter bevorzugt ist das Anströmungselement entlang einer senkrecht zur Richtung des Luftstroms orientierten Flächenkante angelenkt, d.h. die Schwenkachse verläuft entlang dieser Flächenkante.

Alternative Ausgestaltungen können beispielsweise ein elastisches Blatt als Anströmungselement aufweisen, welches in einem Bereich fixiert ist und das zumindest einen freien Bereich aufweist, welcher mittels Anströmung durch den Luftstrom elastisch auslenkbar ist. In einer solchen Ausgestaltung kann die Übertragung der Position des Anströmungselementes zur Anzeigeeinheit auf rein mechanische Weise technisch aufwendig sein. Beispielsweise können daher weiter bevorzugt elektrische Kontakte durch die Auslenkung geschlossen oder geöffnet werden oder elastische Biegungen in elektrische Signale umgewandelt werden, welche zu der Anzeigeeinheit übertragen werden.

In einer bevorzugten Ausgestaltung der Erfindung weist die Anzeigeeinheit ein schwenkbares Anzeigelement auf, durch dessen Stellung die Position des Anströmungselementes anzeigbar ist. Mittels eines solchen schwenkbaren Anzeigeelements kann auf einfache Weise, beispielsweise in der Art eines Zeigers, eine visuelle Anzeige der Position des Anströmungselements erfolgen. Insbesondere bei Ausgestaltungen, bei denen sowohl das Anströmungselement als auch ein Anzeigeelement der Anzeigeeinheit schwenkbar ausgebildet sind, lässt sich ein solcher Drehrichtungsanzeiger auf einfache Weise mechanisch realisieren.

Ferner bevorzugt liegt der gemeinsame Schwerpunkt von Anströmungselement, Welle und Anzeigeelement auf der Wellenachse. In einer solchen Ausführungsform wird die Position des Anströmungselements nicht durch die Schwerkraft beeinflusst. Insbesondere wird folglich die Anzeige des Anzeigeelements nicht durch die Schwerkraft verfälscht. Ein solcher Drehrichtungsanzeiger kann dann beliebig um die das Anströmungselement und das Anzeigeelement verbindende Welle gedreht werden, ohne dass diese Orientierung die Anzeige des Anzeigeelements beeinflusst. Entsprechend ist ein solcher Drehrichtungsanzeiger entlang des Umfangs eines Kühllüfters frei positionierbar.

Vorzugsweise ist der Drehrichtungsanzeiger zur Befestigung an einer Kühlrippe des Elektromotors ausgebildet und vorzugsweise auf die Kühlrippe klipsbar oder zwischen zwei Kühlrippen einklemmbar. Ferner bevorzugt kann der Drehrichtungsanzeiger zur Befestigung an einem Gehäuse des Elektromotors bzw. des Kühllüfters und vorzugsweise an das Gehäuse klipsbar oder rastbar ausgebildet sein. Damit ist der Drehrichtungsanzeiger einfach an dem Elektromotor anbringbar. Ferner kann ein Elektromotor zur Drehrichtungsanzeige einfach nachgerüstet werden, da keine Befestigungselemente am Elektromotor vorgesehen sein müssen.

Bevorzugt ist bei dem Drehrichtungsanzeiger das Anströmungselement an einer solchen Position eines Elektromotors mit einem Radiallüfter anordbar, dass es in einer Tangentialkomponente des Luftstroms des Radiallüfters gelegen ist. Bei einem solchen Radiallüfter ist die Tangentialkomponente des Luftstroms von der Drehrichtung des Elektromotors abhängig. Daher eignet sich eine entsprechende Anordnung des Drehrichtungsanzeigers in besonderer Weise zur Ermittlung und Anzeige der Drehrichtung des Elektromotors.

Bevorzugt handelt es sich bei dem Elektromotor um einen Drehstrommotor, bei welchem es leicht zu einem fehlerhaften Anschluss an eine Spannungsversorgung kommen kann, sodass es wichtig ist, die richtige Drehrichtung zu erkennen.

Bevorzugt ist der Kühllüfter ein Radiallüfter. Dieser wird dabei von einer Motorwelle des Elektromotors angetrieben, sodass die Drehrichtung des Lüfters der Drehrichtung des Motors entspricht. Der Drehrichtungsanzeiger ist in dieser bevorzugten Ausführungsform des Elektromotors mit einer Anzeigestelleinheit ausgebildet, welche eine das Anströmungselement und das Anzeigeelement verbindende Welle umfasst. Das Anströmungselement ist in einer Tangentialkomponente des Luftstroms des Kühllüfters angeordnet. Die das Anströmungselement und das Anzeigeelement verbindende Welle erstreckt sich dabei vorzugsweise parallel zur Motorwellenachse. Die Anzeigeeinheit ist dabei an der Außenseite des Elektromotors angeordnet. Insbesondere bei Ausführungsformen des Drehrichtungsanzeigers mit auf der Wellenachse liegendem gemeinsamen Schwerpunkt von Anströmungselement, Welle und Anzeigeelement kann der Drehrichtungsanzeiger um einen beliebigen Winkel geneigt sein, ohne dass das Ergebnis verfälscht ist. Daher kann der Drehrichtungsanzeiger auch an jeder Position entlang des Umfanges des Elektromotors angeordnet sein.

Das erfindungsgemäße Pumpenaggregat weist einen solchen zuvor beschriebenen Elektromotor auf. Gerade bei Pumpenaggregaten ist die Drehrichtung des Elektromotors und damit der Pumpe von besonderer Relevanz, da die Pumpeffizienz der Pumpe wesentlich von der Drehrichtung abhängt. Das erfindungsgemäße Pumpenaggregat gewährleistet daher eine zuverlässige Inbetreibnahme bei unaufwändiger Kontrolle der Pumpeffizienz.

Nachfolgend wird die Erfindung anhand eines in den Zeichnungsfiguren dargestellten Ausführungsbeispiels näher erläutert. In diesen zeigen:
- Fig.1a,b: einen Drehrichtungsanzeiger an einem erfindungsgemäßen Elektromotor mit einem Kühllüfter in einer perspektivischen Ausschnittsansicht,
- Fig. 2a, b: den Drehrichtungsanzeiger gemäß Fig. 1 in einer perspektivischen Explosionsdarstellung,
- Fig. 2c: den Drehrichtungsanzeiger gemäß Fig. 1 und 2 in einer perspektivischen Darstellung,
- Fig. 3a: den Drehrichtungsanzeiger gemäß Fig. 1-3 an einem Elektromotor mit einem Kühllüfter und mit an einem Lüftergehäuse befestigter Anzeigeeinheit in einer perspektivischen Ausschnittsansicht,
- Fig. 3b: den Drehrichtungsanzeiger in einer Anordnung gemäß Fig. 3a in einer perspektivischen Ansicht und
- Fig. 4a, b: den Drehrichtungsanzeiger gemäß Fig. 1-3 in einer Anordnung gemäß Fig. 3a, b in einer perspektivischen Ausschnittsansicht.

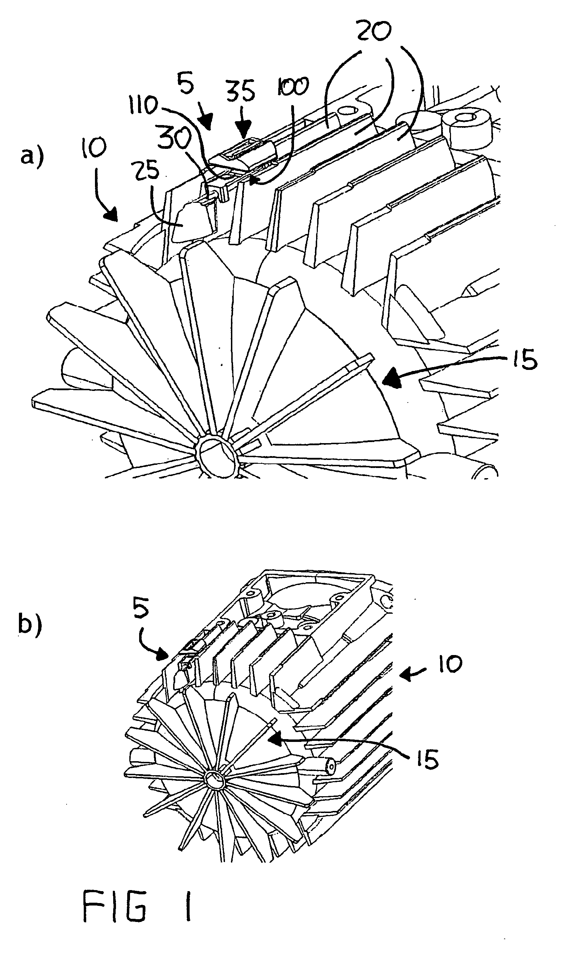

Der Drehrichtungsanzeiger 5 ist in diesem Ausführungsbeispiel wie in den Fig. 1a, b dargestellt an einem Elektromotor 10 mit einem Kühllüfter 15 angeordnet. Dazu ist der Drehrichtungsanzeiger 5 zwischen zwei Kühlrippen 20 des Elektromotors 10 angebracht.

Der Drehrichtungsanzeiger 5 weist eine flächig ausgestaltete Lamelle 25 als Anströmungselement, eine mit der Lamelle 25 verbundene Welle 30 als Anzeigestelleinheit und eine mit der Welle 30 gekoppelte Anzeigeeinheit 35 auf. Der Drehrichtungsanzeiger 5 befindet sich zur Drehrichtungsanzeige in einer Tangentialkomponente des Luftstroms des sich drehenden Radiallüfters 15. Die Richtung des tangentialen Luftstroms hängt dabei direkt von der Drehrichtung des Radiallüfters 15 und damit des Elektromotors 10 ab. In der in den Fig. 1a, b dargestellten Anordnung ragt die Lamelle 25 schwenkbar in den tangentialen Luftstrom des Radiallüfters 15 hinein. Je nach Drehrichtung des Radiallüfters 15 wird die Lamelle 25 von einer Seite durch den tangentialen Luftstrom angeströmt. Diese Anströmung lenkt die Lamelle 25 aus, sodass diese um die Längsachse der Welle 30 in diejenige Richtung schwenkt, in welche die Tangentialkomponente des Luftstroms gerichtet ist. Die Schwenkrichtung der Lamelle 25 gibt daher zuverlässig die Drehrichtung des Radiallüfters 15 an. Zur Drehrichtungsanzeige wird nun die Schwenkrichtung der Lamelle 25 über die Welle 30 als Anzeigestelleinheit an die Anzeigeeinheit 35 übertragen. Damit kann die Schwenkrichtung der Lamelle 25 - und somit auch die Drehrichtung des Radiallüfters 15 - an der Anzeigeeinheit 35 abgelesen werden.

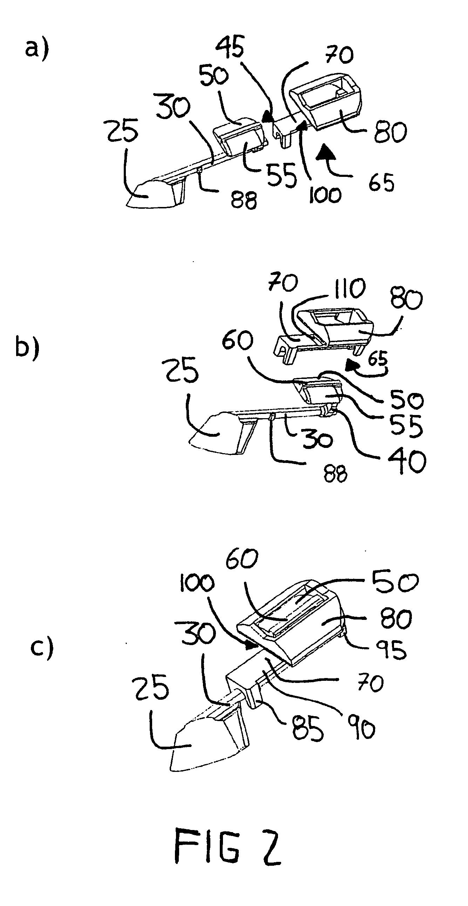

Die Arbeitsweise des Drehrichtungsanzeigers 5 wird dazu anhand der Fig. 2a-c näher erläutert. Die Lamelle 25 ist zur Drehrichtungsanzeige an einem axialen Ende der Welle 30 befestigt und zur senkrechten Anströmung durch die Tangentialkomponente des Luftstroms angeordnet. Dabei erstreckt sich die Lamelle 25 in lediglich einer radialen Richtung von der Achse der Welle 30 fort. Auf diese Weise führt die Anströmung der Lamelle 25 zu einer Auslenkung mit einer Drehung der Welle 30 um ihre Längsachse. Diese Drehung der Welle 30 wird zur Verstellung der Anzeige der Anzeigeeinheit 35 genutzt. Dazu ist die Welle einstückig bzw. einteilig mit einem am von der Lamelle 25 weg gerichteten axialen Ende der Welle 30 befindlichen Anzeigeelement in Form eines Zeigerarms 40 ausgestaltet. Dieser Zeigerarm 40 streckt sich ebenfalls in einer radialen Richtung von der Achse der Welle 30 fort, sodass die radialen Richtungen von Lamelle 25 und Zeigerarm 40 einen Winkel von 180° einschließen. Diese Anordnung erlaubt zum einen, die Lamelle 25 in den tangentialen Luftstrom des Radiallüfters 15 hineinragen zu lassen und gleichzeitig den Zeigerarm 40 für die Anzeigeeinheit 35 vom Elektromotor 10 weg weisen zu lassen. Entsprechend lassen sich Teile der Anzeigeeinheit einfach außen am Motor anordnen. Insbesondere kann die Drehrichtung eines Motors einfach visuell von außen erkannt werden. Zum anderen ermöglicht dieser Aufbau des Drehrichtungsanzeigers 5 eine besonders vorteilhafte Lagerung, wie weiter unten erläutert.

Das freie Ende des Zeigerarms 40 endet in einer Zeigerspitze 45. An diese Zeigerspitze 45 grenzen zwei verschiedenfarbige Anzeigefläche 50, 55 an. Dabei sind die Anzeigeflächen 50, 55 so orientiert, dass sich die beiden Anzeigeflächen 50, 55 in einer zur Längsachse der Welle 30 parallelen Kante 60 berühren. Diese Berührungskante 60 steht stegförmig radial nach außen vor und dient zugleich als Anschlag 60. Die Flächen 50, 55 bilden einen stumpfen Winkel, der zur Welle 30 hin geöffnet ist und weisen in symmetrischer Weise vom Zeigerarm 40 weg. Das anzeigeseitige axiale Ende der Welle 30, der Zeigerarm 40, die Zeigerspitze 45 und die Anzeigeflächen 50, 55 sind in einem Zeigergehäuse 65 untergebracht. Dieses Zeigergehäuse 65 besteht aus einer Gabel 70 zur drehbaren Aufnahme der Welle 30 sowie einer Blende 80.

Das Zeigergehäuse 65 ist dabei zur drehfesten Montage an dem Elektromotor 10 ausgebildet und erlaubt eine Drehbewegung der Welle 30 sowie die Schwenkbewegung von Zeigerarm 40, Zeigerspitze 45 und den Anzeigeflächen 50, 55. Dazu umgreift ein Zinkenpaar 85 der Gabel 70 senkrecht zur Längsachse der Welle 30 orientiert die Welle 30. Zur axialen Arretierung weist die Welle 30 einen Anschlag 88 auf, welcher an der dem Zeigerarm 40 zugewandten Seite des Zinkenpaares 85 anliegt. Dieser Anschlag 88 verhindert eine axiale Verschiebung der Welle 30 in die vom Zeigerarm 40 weggerichtete Richtung. Die Gabel 70 besitzt einen flächig ausgestalteten Verbindungssteg 90, welcher derart im rechten Winkel vom Zinkenpaar 85 abgewinkelt ist, dass er sich parallel zur Welle 30 bis an jenes Ende erstreckt, an welchem sich der Zeigerarm 40 befindet. An diesem axialen Ende ist die Welle 30 in einem zweiten an der Gabel 70 befindlichen Zinkenpaar 95 drehbar gelagert. An dem axialen Ende des Verbindungsstegs 90 ist die Blende 80 derart an der Gabel 6 angebracht, dass sie von dem Verbindungssteg 90 der Gabel 70 in Richtung normal zur Längsachse der Welle 30 hinreichend beabstandet ist. Dieser Abstand erweist sich als erforderlich, um die Anzeigeeinheit an dem Gehäuse eines Kühllüfters vorbei zu führen, wie weiter unten ausgeführt ist.

Die Blende 80, deren Längsachse parallel zur Längsachse der Welle 30 orientiert ist, besitzt in etwa die Gestalt eines Segmentes eines Kreiszylinders. Die ebene Fläche des Zylindersegements ist dabei der Welle 30 zugewandt und senkrecht zum Zeigerarm 40 orientiert. An der von der Achse abgewandten Mantelfläche der Blende 80 befindet sich ein Sichtfenster, welches als Einkerbung der Blende 80 ausgestaltet ist. Je nach Schwenkrichtung des Zeigerarms 40 ist dabei jeweils eine der beiden Anzeigeflächen 50, 55 im Sichtfenster der Blende 80 sichtbar. Welche Anzeigefläche jeweils im Sichtfenster der Blende 80 sichtbar ist, hängt folglich von der Richtung der Auslenkung der Lamelle 25 und damit von der Richtung der Tangentialkomponente des Luftstroms des Kühllüfters 15 ab.

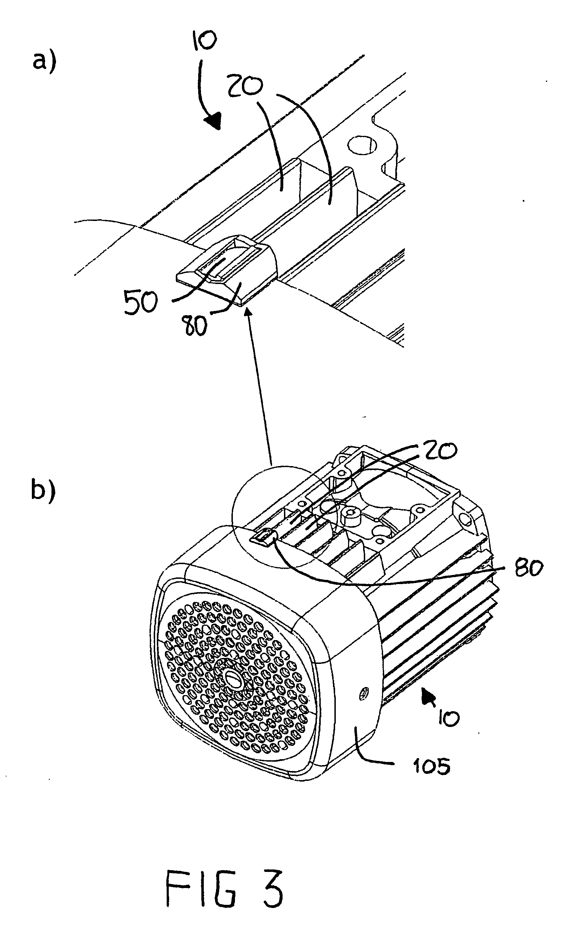

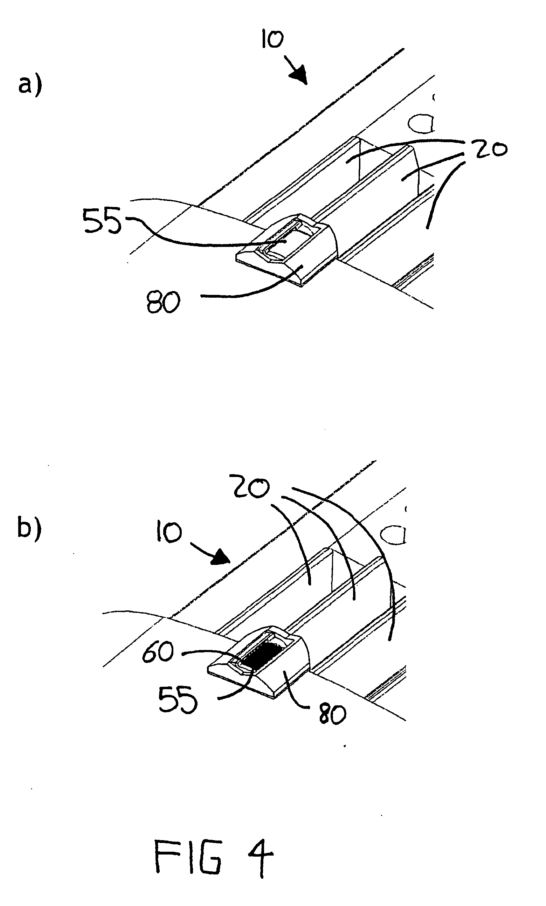

Um eine leichte visuelle Kontrolle der Drehrichtung zu gewährleisten, sind die beiden Anzeigeflächen 50, 55 z.B. unterschiedlich eingefärbt. Bei erwünschter Rotationsrichtung des Elektromotors 10 bzw. des Kühllüfters 15 ist z.B. eine grüne Anzeigefläche 50 sichtbar. Wird der Elektromotor 10 und damit auch der Kühllüfter 15 im falschen Drehsinn betrieben, so schwenken die Lamelle 25 und der Zeigerarm 40 in die jeweils entgegengesetzte Richtung, sodass die andere Anzeigefläche 55 in dem Sichtfenster der Blende 80 sichtbar ist. In dem hier beschriebenen Ausführungsbeispiel handelt es sich dabei z.B. um eine rote Anzeigefläche 55 (Fig. 2-4). Damit ist der Drehrichtungsanzeiger ausgebildet für den Fall, dass die gewünschte Drehrichtung bereits festliegt. Alternativ können auf den Anzeigeflächen 50, 55 auch die Drehrichtungen angegeben sein.

Der zwischen den beiden Anzeigeflächen 50, 55 liegende Anschlag 60 begrenzt dabei die Auslenkung des Anströmungselements 25. Dazu ist der Anschlag 60 anders als die Anzeigeflächen 50, 55 als aus dem Sichtfenster der Blende 80 hervortretend ausgebildet. Daher schlägt der Anschlag 60 bei einer hinreichend starken Auslenkung des Anströmungselements 25 an die Blende 80 an und begrenzt die weitere Drehung des drehfesten Systems aus Anströmungselement 25, Welle 30 und Anzeigeelement 35.

Der Drehrichtungsanzeiger 5 mit der in der Gabel 70 drehbaren Welle 30 ist zwischen zwei Kühlrippen 20 angeordnet.

Der Drehrichtungsanzeiger 5 ist derart zwischen zwei Kühlrippen 20 angebracht, dass die Blende 80 mit ihrer ebenen Fläche an der Außenseite eines Gehäuses 105 zur Abdeckung des Radiallüfters 15 zur Anlage kommt. Die Anbringung des Drehrichtungsanzeigers 5 erfolgt dabei über einen Spalt 100, der durch den Abstand zwischen Blende 80 und Verbindungssteg 90 gebildet ist. Dazu ist der Drehrichtungsanzeiger 5 so orientiert, dass der Spalt 100 zwischen Gabel 70 und Blende 80 an jenem axialen Ende geöffnet ist, welches in Richtung der Welle 30 der Lamelle 25 zugewandt ist. Auf diese Weise kann das Gehäuse 105 mit seiner offenen Seite derart axial in den Spalt 100 eingeschoben werden, dass die Innenseite des Gehäuses 105 mit der Außenseite der Gabel 70 zur Anlage kommt. Das Gehäuse 105 umgibt dabei umfänglich den Radiallüfter 15 und das axiale Ende des Elektromotors 10 und weist an dem dem Elektromotor abgewandten axialen Ende eine mit Öffnungen versehene Stirnfläche auf. Das andere axiale Ende des Gehäuses 105 ist dabei geöffnet, sodass sich der Zeigerarm 40 an dem Gehäuse 105 radial vorbeistreckt und die Blende 80 an der Außenseite des Gehäuses 105 anliegend hält.

Zur Positionierung zwischen den beiden Kühlrippen 20 ist der Drehrichtungsanzeiger 5 ist über seinen Verbindungssteg 90 formschlüssig mit dem Gehäuse 105 verbindbar. Dazu weist der Verbindungssteg 90 an derjenigen Seite, welche mit dem Gehäuse 105 zur Anlage kommt eine senkrecht zur Längsachse des Verbindungsstegs 90 orientierte Rastrille 110 auf. Diese Rastrille 110 ist zur formschlüssigen Verbindung mit einem (nicht dargestellten) Rastwulst an der Innenseite des Gehäuses 105 ausgebildet, indem der Rastwulst in die Rastrille 110 einrastet.

**Bezugszeichenliste**

| | | |
|---|---|---|
| | - | Drehrichtungsanzeiger |
| 10 | - | Elektromotor mit Kühllüfter |
| 15 | - | Radiallüfter als Kühllüfter |
| 20 | - | Kühlrippe |
| 25 | - | Lamelle als Anströmungselement |
| 30 | - | Welle als Anzeigestelleinheit |
| 35 | - | Anzeigeeinheit |
| 40 | - | Zeigerarm |
| 45 | - | Zeigerspitze |
| 50 | - | Grüne Anzeigefläche |
| 55 | - | Rote Anzeigefläche |
| 60 | - | Anschlag |
| 65 | - | Zeigergehäuse |
| 70 | - | Gabel |
| 80 | - | Blende |
| 85 | - | Zinkenpaar |
| 88 | - | Anschlag |
| 90 | - | Verbindungssteg |
| 95 | - | Zinkenpaar |
| 100 | - | Spalt |
| 105 | - | Gehäuse |
| 110 | - | Rastrille |

## Patentansprüche

1. Elektromotor (10) mit einem Kühllüfter (15),
**dadurch gekennzeichnet, dass**
der Kühllüfter (15) ein Radiallüfter (15) ist,
welcher von einer Motorwelle des Elektromotors (10) angetrieben wird,
wobei der Elektromotor (10) einen Drehrichtungsanzeiger (5) aufweist, welcher ein zwischen zwei Positionen bewegliches Anströmungselement (25) aufweist, welches derart an dem Elektromotor (10) mit dem Kühllüfter (15) angeordnet ist, dass das Anströmungselement (25) in einer Tangentialkomponente des Luftstroms des Kühllüfters (15), dessen Richtung von der Drehrichtung des Elektromotors (10) abhängt, gelegen ist und abhängig von der Richtung des Luftstroms von diesem in jeweils eine seiner zwei Positionen bewegt wird, und
wobei der Drehrichtungsanzeiger (5) eine Anzeigeeinheit (35) aufweist, die zu einer visuellen Anzeige der Position des Anströmungselementes (25) ausgebildet ist und die sichtbar an einer Außenseite des Elektromotors (10) (10) angeordnet ist und
wobei der Drehrichtungsanzeiger (5) eine Anzeigestelleinheit (30) aufweist, welche Anzeigeeinheit (35) und Anströmungselement (25) miteinander verbindet und die Position des Anströmungselements (25) zur Anzeigeeinheit (35) überträgt und welche eine das Anströmungselement (25) und das Anzeigeelement (40) verbindende Welle (30) aufweist.

2. Elektromotor (10) nach Anspruch 1,
**dadurch gekennzeichnet, dass**
bei dem Drehrichtungsanzeiger (5) das Anströmungselement (25) schwenkbar angeordnet ist.

3. Elektromotor (10) nach Anspruch 1 oder 2,
**dadurch gekennzeichnet, dass**
bei dem Drehrichtungsanzeiger (5) die Anzeigeeinheit (35) ein schwenkbares Anzeigeelement (40) aufweist, durch dessen Stellung die Position des Anströmungselementes (25) anzeigbar ist.

4. Elektromotor (10) nach einem der vorangehenden Ansprüche,
**dadurch gekennzeichnet, dass**
bei dem Drehrichtungsanzeiger (5) die das Anströmungselement (25) und das Anzeigeelement (40) verbindende Welle (30) parallel zur Motorwellenachse erstreckt.

5. Elektromotor (10) nach einem der vorangehenden Ansprüche,
**dadurch gekennzeichnet, dass**
bei dem Drehrichtungsanzeiger (5) der gemeinsame Schwerpunkt von Anströmungselement (25), Welle (30) und Anzeigeelement (40) auf der Wellenachse liegt.

6. Elektromotor (10) nach einem der vorangehenden Ansprüche,
**dadurch gekennzeichnet, dass**
der Drehrichtungsanzeiger (5) zur Befestigung an einer Kühlrippe (20) des Elektromotors (10) ausgebildet und vorzugsweise auf die Kühlrippe (20) klipsbar ist oder zwischen zwei benachbarten Kühlrippen einklemmbar ist.

7. Elektromotor (10) nach einem der vorangehenden Ansprüche,
**dadurch gekennzeichnet, dass**
der Drehrichtungsanzeiger (5) zur Befestigung an einem Gehäuse (105) des Elektromotors (10) bzw. des Kühllüfters (15) und vorzugsweise an das Gehäuse (105) klipsbar bzw. rastbar ausgebildet ist.

8. Elektromotor (10) nach einem der vorangehenden Ansprüche,
**dadurch gekennzeichnet, dass**
bei dem Drehrichtungsnazeiger (5) das Anströmungselement (25) an einer solchen Position eines Elektromotors (10) mit einem Radiallüfter (15) anordbar ist, dass es in einer Tangentialkomponente des Luftstroms des Radiallüfters (15) gelegen ist.

9. Pumpenaggregat,
**dadurch gekennzeichnet, dass**
das Pumpenaggregat einen Elektromotor (10) nach einem der vorhergehenden Ansprüche aufweist.

## Claims

1. An electric motor (10) with a cooling fan (15),
**characterised in that**
the cooling fan (15) is a radial fan (15),
which is driven by a motor shaft of the electric motor (10),
wherein the electric motor (10) comprises a rotational direction indicator (5) comprising an onflow element (25) which is movable between two positions and which is arranged on the electric motor (10) with the cooling fan (15), in a manner such that the onflow element (25) is situated in a tangential component of the airflow of the cooling fan (15), whose direction depends on the rotational direction of the electric motor (10) and is moved by the airflow in each case into one of its two positions, depending on the direction of the airflow, and
wherein the rotation direction indicator (5) comprises a display unit (35) which is designed for the visual display of the position of the onflow element (25) and is visibly arranged on an outer side of the electric motor (10), and
wherein the rotation direction indicator (5) comprises a display actuating element (30) which connects the display unit (35) and the onflow element (25) to one another, transmits the position of the onflow element (25) to the display unit (35) and comprises a shaft (30) connecting the onflow element (25) and the display element (40).

2. An electric motor (10) according to claim 1,
**characterised in that**
with regard to the rotation direction indicator (5), the onflow element (25) is arranged in a pivotable manner.

3. An electric motor (10) according to claim 1 or 2,
**characterised in that**
with regard to the rotation direction indicator (5), the display unit (35) comprises a pivotable display element (40), by way of whose position, the position of the onflow element (25) can be displayed.

4. An electric motor (10) according to one of the preceding claims,
**characterised in that**
with regard to the rotation direction indicator (5), the shaft (30) connecting the onflow element (25) and the display element (40) extends parallel to the motor shaft axis.

5. An electric motor (10) according to one of the preceding claims,
**characterised in that**
with regard to the rotation direction indicator (5), the common centre of gravity of the onflow element (25), of the shaft (30) and of the display element (40), lies on the shaft axis.

6. An electric motor (10) according to one of the preceding claims,
**characterised in that**
the rotation direction indicator (5) is designed for fastening on a cooling rib (20) of the electric motor (10) and preferably can be clipped onto the cooling rib (20) or can be clamped between two adjacent cooling ribs.

7. An electric motor (10) according to one of the preceding claims,
**characterised in that**
the rotation direction indicator (5) is designed for fastening on a housing (105) of the electric motor (10) or of the cooling fan (15) and preferably is designed such that it can be clipped or locked onto the housing (105).

8. An electric motor (10) according to one of the preceding claims,
**characterised in that**
with regard to the rotation direction indicator (5), the onflow element (25) can be arranged at such a position of an electric motor (10) with a radial fan (15), that it is situated in a tangential component of the airflow of the radial fan (15).

9. A pump assembly,
**characterised in that**
the pump assembly comprises an electric motor (10) according to one of the preceding claims.

## Revendications

1. Moteur électrique (10) équipé d'un ventilateur de refroidissement (15), **caractérisé en ce que** le ventilateur de refroidissement (15) est un ventilateur radial (15) qui est entraîné par un arbre du moteur électrique (10), le moteur électrique (10) présentant un indicateur de sens de rotation (5) qui présente un élément d'écoulement (25) mobile entre deux positions qui est disposé sur le moteur électrique (10) équipé du ventilateur de refroidissement (15) de telle sorte que l'élément d'écoulement (25) se place dans une composante tangentielle du flux d'air du ventilateur de refroidissement (15), dont la direction dépend du sens de rotation du moteur électrique (10), et est déplacé selon la direction du flux d'air par ce dernier dans l'une ou l'autre de ses deux positions, et
l'indicateur de sens de rotation (5) présentant une unité d'indication (35) qui est conçue pour assurer une indication visuelle de la position de l'élément d'écoulement (25) et qui est disposée pour être visible sur un côté extérieur du moteur électrique (10), et
l'indicateur de sens de rotation (5) présentant une unité de réglage de l'indication (30) qui relie l'unité d'indication (35) à l'élément d'écoulement (25) et transmet la position de l'élément d'écoulement (25) à l'unité d'indication (35), et qui présente un arbre (30) qui relie l'élément d'écoulement (25) à l'élément d'indication (40).

2. Moteur électrique (10) selon la revendication 1, **caractérisé en ce que**, dans l'indicateur de sens de rotation (5), l'élément d'écoulement (25) est monté de façon à pouvoir pivoter.

3. Moteur électrique (10) selon la revendication 1 ou 2, **caractérisé en ce que**, dans l'indicateur de sens de rotation (5), l'unité d'indication (35) présente un élément indicateur pivotant (40) dont l'orientation est indicatrice de la position de l'élément d'écoulement (25).

4. Moteur électrique (10) selon l'une des revendications précédentes, **caractérisé en ce que**, dans l'indicateur de sens de rotation (5), l'arbre (30) qui relie l'élément d'écoulement (25) à l'élément indicateur (40) s'étend parallèlement à l'axe de l'arbre du moteur.

5. Moteur électrique (10) selon l'une des revendications précédentes, **caractérisé en ce que**, dans l'indicateur du sens de rotation (5), le centre de gravité commun de l'élément d'écoulement (25), de l'arbre (30) et de l'élément indicateur (40) se trouve sur l'axe de l'arbre.

6. Moteur électrique (10) selon l'une des revendications précédentes, **caractérisé en ce que** l'indicateur de sens de rotation (5) est conçu pour être fixé à une ailette de refroidissement (20) du moteur électrique (10), et de préférence pour pouvoir être clipsé sur l'ailette de refroidissement (20) ou coincé entre deux ailettes de refroidissement adjacentes.

7. Moteur électrique (10) selon l'une des revendications précédentes, **caractérisé en ce que** l'indicateur de sens de rotation (5) est conçu pour être fixé à un carter (105) du moteur électrique (10) ou du ventilateur de refroidissement (15), et de préférence pour être clipsé ou encliqueté sur le carter (105).

8. Moteur électrique (10) selon l'une des revendications précédentes, **caractérisé en ce que**, dans l'indicateur de sens de rotation (5), l'élément d'écoulement (25) peut être placé dans une position d'un moteur électrique (10) équipé d'un ventilateur radial (15) telle qu'il soit placé dans une composante tangentielle du flux d'air du ventilateur radial (15).

9. Groupe motopompe, **caractérisé en ce que** le groupe motopompe présente un moteur électrique (10) selon l'une des revendications précédentes.
